# EUROPEAN PATENT APPLICATION

(11) **EP 1 103 386 A1**
(43) Date of publication of application: **30.05.2001**
(21) Application number: 00920749.9
(22) Date of filing: 18.04.2000
(51) Int. Cl.: B42D 15/02

(54) **IMPROVED POSTCARD**

(30) Priority: 04.05.1999 ES 9901147 U
(71) Applicant: Gascon Gorgoll, Rafael, 17320 Tossa de Mar (ES)
(72) Inventor: Gascon Gorgoll, Rafael, 17320 Tossa de Mar (ES)
(86) International application number: ES0000142
(87) International publication number: WO0066368

(57) **Abstract**

The invention relates to a postcard consisting of a substantially rectangular (1) sheet of a given thickness, a recess serving as a deposit for the insertion of a thin light-weigth object such as a CD-ROM (2) being disposed inside said sheet. Said postcard has a plastified sheet (3) on its front part, which is fully attached to the sheet having a given thickness either by its contour or by means of tabs. Said sheet having a given thickness is printed on both sides. The back side is printed with lines defining the limits intended for writing, for the address or place for the stamp while the front face includes the selected cover. The postcard may also have a foldable sheet (4) serving as a cover. The plastified sheet can be removed to have access to the thin object such as a CD-ROM. If said sheet is not removable, the postcard can be torn open.

## Description

### PURPOSE OF THE INVENTION

This invention of the perfected postcard, as its title suggests, consists of a postcard made up of a sheet of a specified thickness in the interior of which a thin, light weight object such as a CD-ROM will be included. On the front surface of the postcard there is a plastic sheet which is attached to the aforementioned sheet of a specified thickness all the way round or by means of folding flaps enabling this plastic sheet to be removed.

### BACKGROUND OF THE INVENTION

Up to the present time, postcards which are found in shops showing views of a particular place or any other representation are well-known but they leave the subject incomplete.

### DESCRIPTION OF THE INVENTION

To resolve this problem the perfected postcard of the present invention has been devised. It consists of a postcard made up of a sheet of a specified thickness in the interior of which there is a recess in the form of a container in which a thin light-weight object such as CD-ROM will be included. On the front surface of the postcard there is a plastic sheet which is attached to the sheet of a specified thickness all the way round or by means of folding flaps enabling this plastic sheet to be removed to allow acces to the thin, light-weight object such as CD-ROM.

This sheet of a specified thickness, mentioned before, is to be printed on both sides; on the back with lines marking the limitation of the written message, the address or the position of the stamp, and on the front with the chosen representation. Also being considered is the possibility of the card having a folding flap similar to the front cover of a book on the front surface.

Acces to the thin, light-weight object such as a CD-ROM will be by breaking the card if it isn't provided with a plastic removable sheet or, if it has got a plastic removable sheet, by separating the plastic sheet from the original sheet of a specified thickness thus liberating the thin, light-weight object such as a CD-ROM.

### DESCRIPTION OF THE DRAWINGS

To complete the description of the invention and with the object of helping to give a better understanding of its characterisitcs, accompanying as an integral part of this written report is a set of drawings which serve to show in an unrestricted and illustrative character in the following way:

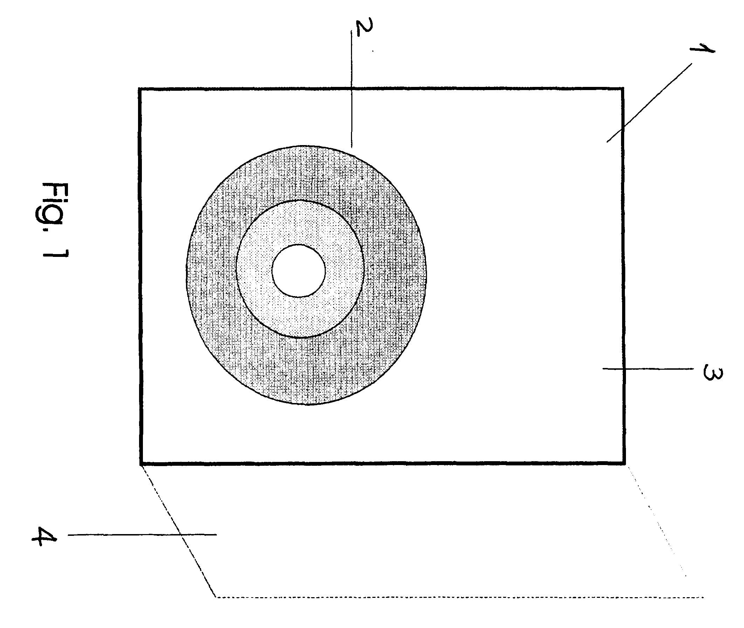

Figure 1 shows a view in perspective of the perfected postcard.

### PREFERRED METHOD OF PRODUCTION OF THE INVENTION

As can be seen in Figure 1, the perfected postcard we are concerned with is made of a sheet of a specified thickness, principally rectangular in shape (1), wich is a printed thin cardboard with a recess in the form of a container in wich a thin, light-weight object such as a CD-ROM will be placed (2).

On the front surface of the postcard there is a plastic sheet (3) which is attached to the sheet of a specified thickness all the way round or by means of folding flaps enabling this plastic sheet to be removed to allow access to the thin, light-weight object such as a CD-ROM mentioned before.

Also being considered is the possibility of the card having a folding flap (4) similar to the front cover of a book on the front surface.

It is not considered necessary to amplify this description because any expert in this field understands the significance of the invention and the advantages arising therefrom. The meaning of the terms in which the report is written should always be taken in a broad and unrestricted sense.

The materials, form, size and layout of the components will be susceptible to variation as long as it doesn't entail alterations to the essential characteristics of the invention which are claimed as follows:

## Claims

1. The perfected postcard has special characteristics because it consists of a structure in the form of a sheet of a specified thickness, principally rectangular in shape, which is a printed thin cardboard in which there is a recess in the form of a container in which a thin, light-weight object such as a CD-ROM will be situated. On the front surface of the postcard there is a plastic sheet which is attached to the sheet of a specified thickness all the way round or by means of folding flaps.

2. Conforming to the first claim, the perfected postcard is characterized by the plastic sheet which can be removed to gain acces to the thin, light weight object such as a CD-ROM.

3. Conforming to the first claim the perfected postcard is characterized by the fact that if the plastic sheet is not removable, access to the thin, light-weight object such as a CD-ROM is done by breaking the postcard.
